**Europäisches Patentamt**

**European Patent Office**

**Office européen des brevets**

(19)

(11) Veröffentlichungsnummer: **0 105 117**

**B1**

(12) # EUROPÄISCHE PATENTSCHRIFT

(45) Veröffentlichungstag der Patentschrift:
**05.11.86**

(51) Int. Cl.⁴: **B 60 T 15/00,** B 60 T 17/00,
B 60 T 15/42

(21) Anmeldenummer: **83107546.0**

(22) Anmeldetag: **01.08.83**

(54) **Pulsierend arbeitende Bremsbeschleuniger-Einrichtung für eine indirekt wirkende Druckluftbremse für Schienenfahrzeuge.**

(30) Priorität: **27.08.82 DE 3232047**
**25.03.83 DE 3311037**

(43) Veröffentlichungstag der Anmeldung:
**11.04.84 Patentblatt 84/15**

(45) Bekanntmachung des Hinweises auf die Patenterteilung:
**05.11.86 Patentblatt 86/45**

(84) Benannte Vertragsstaaten:
**CH DE FR GB LI**

(56) Entgegenhaltungen:
**US-A-3 707 314**
**US-A-3 716 276**
**US-A-4 070 068**
**US-A-4 103 977**
**US-A-4 139 239**
**US-A-4 157 849**
**US-A-4 206 949**
**US-A-4 226 482**

(73) Patentinhaber: **KNORR- BREMSE AG, Moosacher Strasse 80 Postfach 401060, D-8000 München 40 (DE)**

(72) Erfinder: **Hintner, Jozef, Eschlefeldstrasse 4, D-8939 Türkheim (DE)**

LIBER, STOCKHOLM 1986

## Beschreibung

Die Erfindung bezieht sich auf eine pulsierend arbeitende Bremsbeschleuniger-Einrichtung für eine indirekt wirkende Druckluftbremse für Schienenfahrzeuge, welche die im Gattungsbegriff des Patentanspruches 1 genannten Merkmale aufweist. Eine derartige Bremsbeschleuniger-Einrichtung ist aus der US-A-4 157 849 bekannt. Die Bremsbeschleuniger-Einrichtung weist somit einen Pulsator auf, über den pulsierend Druckluft aus der Bremsleitung zur Atmosphäre abzapfbar ist, wobei der Pulsator von einem Sensor angesteuert ist. Der Sensor kann mit dem Pulsator eine Ventileinheit bilden. Abweichend hiervon kann der Sensor jedoch auch in die Notbremseinheit eines Bremssteuerventils integriert sein und mit der Notbremseinheit eine Beschleuniger/Notbremseinheit bilden.

## Stand der Technik:

Der Stand der Technik, nach der erwähnten US-A 4 157 849, von dem die Erfindung ausgeht, ist lediglich schematisch in der Figur 1 dargestellt.

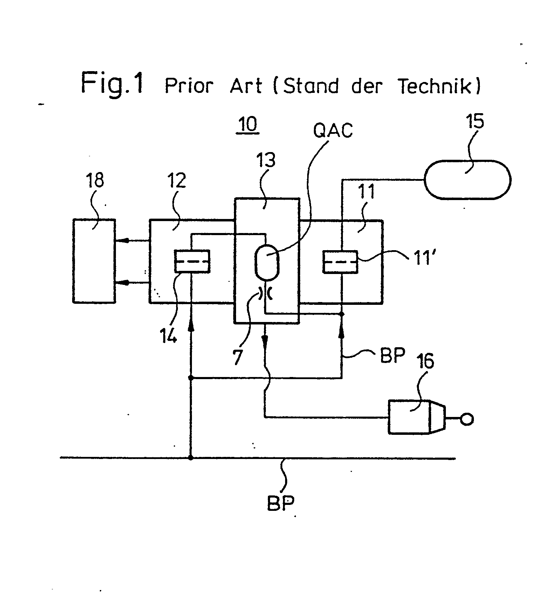

In Figur 1 ist ein Bremssteuerventil für eine einlösige Druckluftbremse für Schienenfahrzeuge mit 10 bezeichnet. Das Bremssteuerventil 10 besteht aus einem Betriebsbremsteil 11 und einem Notbremsteil 12, die durch eine Kanalverbindungsplatte 13 pneumatisch miteinander in Verbindung stehen. Der Betriebsbremsteil 11 und der Notbremsteil 12 sind an die Bremsleitung BP angeschlossen. Der Betriebsbremsteil 11 ist mit einem Hilfsluftbehälter 15 verbunden und beinhaltet einen Druckvergleicher 11′, in dem der Druck aus dem Hilfsluftbehälter 15 mit dem entsprechend der gewählten Bremsstufe erniedrigten BP-Druck in der Bremsleitung BP verglichen wird, um einen der BP-Druckerniedrigung entsprechenden Druck in den Bremszylinder 16 einzusteuern. Der Notbremsteil 12 enthält einen Notbremskolben 14, der den BP-Druck aus der Bremsleitung mit dem QA-Druck einer Steuerkammer QAC vergleicht, die über eine Fülldüse 7 an die BP-Leitung angeschlossen ist.

Bei einer Betriebsbremsung wird der Druck entsprechend der gewählten Bremsstufe um einen bestimmten Wert pro Zeiteinheit erniedrigt, ohne daß dabei ein gewählter Grenzwert überschritten wird. Entsprechend der eingesteuerten Druckabsenkung in der Bremsleitung BP wird der Bremszylinder 16 bei einer Betriebsbremsung mit einem entsprechenden Druck aus dem Hilfsluftbehälter 15 beaufschlagt. Während also der Betriebsbremsteil 11 bei Betriebsbremsung den Druck in dem Bremszylinder 16 überwacht, überprüft das Notbremsteil 12 bei jeder Betriebsbremsung, ob der gewählte Grenzwert für eine maximale BP-Druckabsenkung pro Zeiteinheit überschritten wird. Wird dieser Grenzwert bei einer Betriebsbremsung überschritten, leitet der Notbremsteil 12 eine Schnellbremsung ein.

Während einer Betriebsbremsung überwacht der Notbremskolben 14 eine QA-Entlüftungsdüse, über die ein Druckausgleich zwischen dem jeweiligen BP-Druck und dem QA-Druck hergestellt wird. Wird bei einer Druckabsenkung in der Bremsleitung BP pro Zeiteinheit der Grenzwert überschritten, so ist die QA-Entlüftungsdüse nicht schnell genug in der Lage, den QA-Druck auf das Niveau des BP-Druckes zu erniedrigen. Hierdurch wird durch den Notbremskolben 14 auf bekannte Weise eine Notbremsung eingeleitet.

Bei einem Zug mit z.B. 150 Wagen (ca. 2,3 km Zuglänge) besteht das Problem, daß das von der Lokomotive ausgehende Bremssignal durch Strömungsverluste in den Rohrleitungen geschwächt und verzögert am Zugende ankommt. Dies führt zu längeren Bremszylinderfüllzeiten und dadurch zu längeren Bremswegen. Um einer solchen Abflachung des Druckgradienten in der BP-Leitung im Bereich des Zugendes längerer Züge entgegenzuwirken und eine gleichmäßige Druckbeaufschlagung sämtlicher Bremszylinder auch am Zugende sicherzustellen, ist es bekannt, das Bremssteuerventil mit einem Betriebsbremsbeschleuniger auszurüsten. Hierzu wird bei einer Betriebsbremsung an jedem Bremssteuerventil Luft aus der Bremsleitung zur Atmosphäre entlüftet entsprechend dem Grad der Bremsung. Eine solche Funktion wird nach der US-A 3 707 314 nur für die erste Bremsstufe von der Betriebsbremseinrichtung überwacht.

In neuerer Zeit hat man das Bremssteuerventil mit einem zusätzlichen Betriebsbremsbschleuniger versehen, der nicht nur in der ersten Bremsstufe, sondern bei sämtlichen Bremsstufen wirksam ist. Durch die bereits erwähnte US-A 4 157 849 und weiterhin die US-A 3 716 276, 4 070 068, 4 103 977, 4 139 239, 4 206 949 und 4 226 482 sind bereits verschiedene Bremsbeschleuniger vorgeschlagen worden, die bei jeder Betriebsbremsstufe wirksam sind und die sämtliche räumlich bevorzugt den Notbremsteilen zugeordnet, insbesondere an Notbremsteilen 12, anzuflanschen sind.

Durch die erwähnten US-A 3 716 276, 4 103 977, 4 157 849 und 4 206 949 ist es auch schon bekannt, einem Betriebsbremsbeschleuniger 18 mit einem Pulsator zu versehen, um Luft aus der BP-Leitung pulsierend zur Atmosphäre abzuzapfen. Der Pulsator wird dabei von einem Druck angesteuert, der vom Druck der Steuerkammer QAC abgeleitet ist. Durch die bereits erwähnten US-A 4 070 068; 4 15 78 49, 4 139 239 und 4 226 482 ist es auch schon bekannt, entsprechende Pulsatoren jeweils durch einen Druck anzusteuern, der vom Druck der Bremsleitung BP abgeleitet ist.

Es hat sich gezeigt, daß die Ansteuerung der Pulsatoren mit einem vom Druck der Steuerkammer QAC abgeleiteten Druck besonders zweckmäßig ist.

## Kritik am Stand der Technik

Der Beschleuniger nach der US-A 3 716 276 hat den Nachteil, daß zur Erregung des Pulsators diejenige QA-Luft verwendet wird, die von einem Schieberventil freigegeben wird, das seinerseits vom Notbremskolben zur Aufrechterhaltung bzw. Wiedereinstellung eines BP/QA-Druckgleichgewichts gesteuert wird. Je nach der eingesteuerten Betriebsbremsstufe wird bei einer Betriebsbremsung über ein Schieberventil mehr oder weniger QA-Luft zur Atmosphäre freigegeben, um das BP/QA-Druckgleichgewicht am Notbremskolben aufrechtzuerhalten. Der Pulsator wird also von stark schwankenden QA-Luftmengen beaufschlagt. Aus diesem Grunde ist ein besonders Rückschlagventil vorgesehen, über das größere QA-Luftmengen zur Atmosphäre rasch abgeleitet werden können, ohne daß ein übermäßiger QA-Rückstau zum Notbremskolben auftritt und diesen zur Unzeit in die Notbremsstellung schaltet. Das Rückschlagventil stellt somit ein Sicherheitsrisiko dar, das bei einer Funktionsstörung den Notbremskolben zur Unzeit bei einer Betriebsbremsung in seine Notbremsstellung gehen läßt, wenn die jeweils notwendige QA-Luftmenge nicht über das Rückschlagventil zur Atmosphäre abgelassen werden kann. Andererseits kann der Pulsator derart stark mit QA-Luft beaufschlagt werden, daß er zwar in seine eine Stellung geschaltet wird, aber anschließend nicht sicher zurückgeschaltet wird. Der Pulsator würde also nicht pulsieren. Um diese Schwierigkeit zu vermeiden, muß eine besondere Ventileinrichtung mit einem an BP-Luft angeschlossenes Volumen vorhanden sein, um mittels BP-Druck den Pulsator sicher in seine zweite Stellung zurückschalten zu können.

Durch die Beschleuniger nach den US:A 4 157 849; 4 070 068 und 4 206 949 sind die Nachteile des Beschleunigers nach der US-PS 3 716 276 dadurch behoben, daß zur Erregung des Pulsators nicht die vom Notbremskolben gesteuerte QA-Luft verwendet wird. Vielmehr wird ein zum Notbremskolben parallel geschalteter BP/QA-Sensor verwendet, der ein Ventil steuert, das entweder BP-Luft oder QA-Luft als Erregerquelle an den Pulsator anschließt, wobei die BP- bzw. QA-Luft über eine Düse an den Pulsator geschaltet ist.

Hierdurch kann die Luftmenge, die zur Erregung des Pulsators benötigt wird, besonders eingestellt werden. Eine entsprechende Düse kann bei dem Beschleuniger nach der US-A 3 716 276 zwischen das Schieberventil und dem Pulsator, wie vorstehend erläutert, nicht geschaltet werden. Bei dem Beschleuniger nach der US-A 4 206 949 ist die Düse zwischen dem BP/QA-Sensor und dem Pulsator derart gewählt, daß dieser allein durch QA-Luft zum Takten gebracht wird, ohne daß, wie vor allem nach der US-A 3 716 276, aber auch nach der US-A 4 070 068 BP-Luft in Volumina besonders angestaut werden muß, um BP-Luftimpulse zum Rücksteuern des Pulsators in seine Ausgangslage zur Verfügung zu haben. Bei dem Pulsator nach der US-A 4 206 949 reichte daher ein einziger Ventilsitz aus, während die Pulsatoren nach den US-A 3 716 276 und 4 070 068 jeweils noch zwei Ventilsitze benötigen. Die US-A 4 157 849 und insbesondere die US-A 4 206 949 zeigen also Pulsatoren, die allein durch QA-Luft zum Takten gebracht werden, ohne daß hierzu auch BP-Luftimpulse zum Zurückschalten zur Verfügung stehen müssen.

Wichtig ist nun aber bei den bekannten Beschleunigern nach den US-A 4 157 849, 4 070 068 und 4 206 949, daß die zum Notbremskolben parallel geschalteten BP/QA-Sensoren derart ausgelegt sind, daß sie bereits bei einer unteren Ansprechschwelle ansprechen und daß das von dem Sensor gesteuerte Ventil zur Erregung des Pulsators mit QA- oder BP-Luft geöffnet wird, bevor der Notbremskolben das QA-Entlüftungsventil aufsteuert, um eine Schnellbremsung bei einer Notsituation einzuleiten. Weiterhin muß sichergestellt sein, daß das von den BP/QA-Sensoren überwachte Ventil nach dem QA-Entlüftungsventil wieder in seine Schließstellung geht

Mit anderen Worten müssen also die zu den Notbremskolben parallel geschalteten BP/QA-Sensoren zur Überwachung der Erregerquellen für die Pulsatoren nach den US-A 4 157 849, 4 070 068 und 4 206 949 eine bestimmte niedrigere Ansprechschwelle besitzen als die Notbremskolben.

Nachteilig ist bei den bekannten Beschleunigern nach den US- A 4 157 849, 4 070 068 und 4 206 949, daß die vorgenannten unterschiedlichen Ansprechschwellen genügend weit auseinandergelegt werden müssen, um sicherstellen zu können, daß der von dem BP/QA-Sensor angesteuerte Pulsator zu takten beginnt, bevor das vom Notbremskolben angesteuerte QA-Entlüftungsventil zur Auslösung der Schnellbremsung geöffnet ist.

Durch Alterungen, Materialermüdungen und/oder Umwelteinflüsse können sich aber die unterschiedlichen Ansprechschwellen für den BP/QA-Sensor und für das QA-Entlüftungsventil verschieben, so daß es zu Überschneidungen kommen kann, bei denen dann der vom Sensor zu steuernde Pulsator ausfällt.

Durch den Beschleuniger nach der noch bekannten US-A 4 226 482 ist bereits gezeigt, daß auf einen BP/QA-Sensor gemäß den US-A 4 157 849, 4 070 068 und 4 206 949 verzichtet werden kann, wenn der Notbremskolben nicht nur ein QA-Entlüftungsventil zur Aufrechterhaltung des BP/QA-Druckgleichgewichtes während einer Betriebsbremsung und ein BP-Schnellentlüftungsventil zur Auslösung einer Schnellbremsung bei einer Notsituation, sondern zusätzlich noch ein Ventil zur Erregung des Pulsators überwacht. Eine solche Lösung bietet sich vor allem dann an, wenn über das Ventil von der Bremsleitung abgezapfte BP-Luft zur Erregung des Pulsators verwendet wird, und wenn gemäß der US-A 4 226 482 und der US-A 3 716 276 das Entlüftungsventil als Schieberventil ausgebildet ist. Hierbei ist es notwendig, daß das Schieberventil derart ausgebildet ist, daß der Notbremskolben bei einer BP/QA-Druckdifferenz zuerst das vom Notbremskolben gesteuerten Ventil zur Erregung des Pulsators und erst dann das Schieberventil öffnet bzw. schließt.

Eine solche Lösung ist jedoch dann nicht mehr erzielbar, wenn mit dem vom Notbremskolben gesteuerten Ventil QA-Luft aus der Steuerkammer QAC zum Pulsator geschaltet werden soll, wenn außerdem das QA-Entlüftungsventil nicht länger als das Schieberventil, sondern z.B. gemäß den US-A 4 157 849, 4 070 068 und 4 206 949 als Sitzventil ausgebildet werden soll.

Hierbei ist zu berücksichtigen, daß man in jüngster Zeit mehr und mehr bestrebt ist, die herkömmliche Schieberventiltechnik für das QA-Entlüftungsventil durch eine Ventilsitztechnik zu ersetzen, die gegenüber der Schieberventiltechnik verschiedene Vorteile besitzt.

Bei den verwendeten bekannten Pulsatoren besteht auch noch das Problem, daß sie schon bei relativ kleinen BP-Druckabsenkungen pro Zeiteinheit zu arbeiten beginnen, die ihre Ursache allein in Druckverlusten in der Bremsleitung haben und nicht auf einer Betriebsbremsung beruhen. Mit anderen Worten ist bei den bekannten Pulsatoren nicht mit einfachen Mitteln sicher gestellt, daß sie erst pulsieren, wenn die BP-Druckabsenkung pro Zeiteinheit einen bestimmten Mindestwert überschritten hat, wenn also eindeutig eine Betriebsbremsung eingeleitet worden ist.

## Aufgabe der Erfindung:

Es ist Aufgabe der Erfindung, einen einfachen, billigen und betriebssicheren Bremsbeschleuniger der eingangs genannten Art anzugeben, der sich ohne Schwierigkeiten derart einstellen läßt, daß er erst zu takten beginnt, wenn die BP-Druckabsenkung in der Bremsleitung pro Zeiteinheit einen bestimmten Mindestwert sicher überschritten hat. Das bedeutet, daß der Pulsator bei sehr geringen Druckabsenkungen pro Zeiteinheit in der Bremsleitung, die nicht auf einer Betriebsbremsung beruhen, zur Aufrechterhaltung des BP/QA-Druckgleichgewichtes entsprechende Mengen von QA-Luft aus der Steuerkammer QAC zur Atmosphäre abströmen läßt, ohne dabei zu takten, also ohne BP-Luft aus der Bremsleitung zyklisch abzuziehen.

Der Bremsbeschleuniger soll darüber hinaus als Ventileinheit mit der Notbremseinheit eines Bremssteuerventils verbindbar sind. Außerdem soll sich der Sensor des Bremsbeschleunigers zur Erregung des Pulsators in die Notbremseinheit integrieren lassen und mit diesem eine Notbrems/Beschleuniger-Ventileinheit bilden. Abweichend hiervon soll der Bremsbescheluniger aber auch als eine separate Ventileinheit ausbildbar und gegebenenfalls zur Unterstützung der Beschleunigerfunktion eines oder mehrerer Bremssteuerventile parallel zu dem oder den betreffenden Bremssteuerventilen schaltbar sein.

## Lösung der Erfindung:

Diese Aufgabe wird erfindungsgemäß durch eine Ausbildung der Bremsbeschleuniger-Einrichtung nach den Merkmalen des Patentanspruches 1 gelöst.

Nach der weiteren Erfindung mögliche, vorteilhafte Ausführungen und Weiterbildungen der Bremsbeschleuniger-Einrichtung sind in den Merkmalen der Unteransprüche angegeben. Die Erfindung wird mehr im einzelnen anhand von bevorzugten Ausführungsbeispielen beschrieben, die in der Zeichnung schematisch im Anschluß an den Stand der Technik (Fig. 1) dargestellt sind. Hierin zeigt:

Figur 2 eine erste Ausführung einer erfindungsgemäßen Notbrems/Beschleuniger-Ventileinheit in Kombination mit einem ersten Pulsator,

Figur 3 eine zweite Ausführung einer erfindungsgemäßen Ventileinheit in Kombination mit einem zweiten erfindungsgemäßen Pulsator

Figur 4 eine Ausführung für ein separates Beschleunigerventil mit dem Pulsator nach Fig. 2.

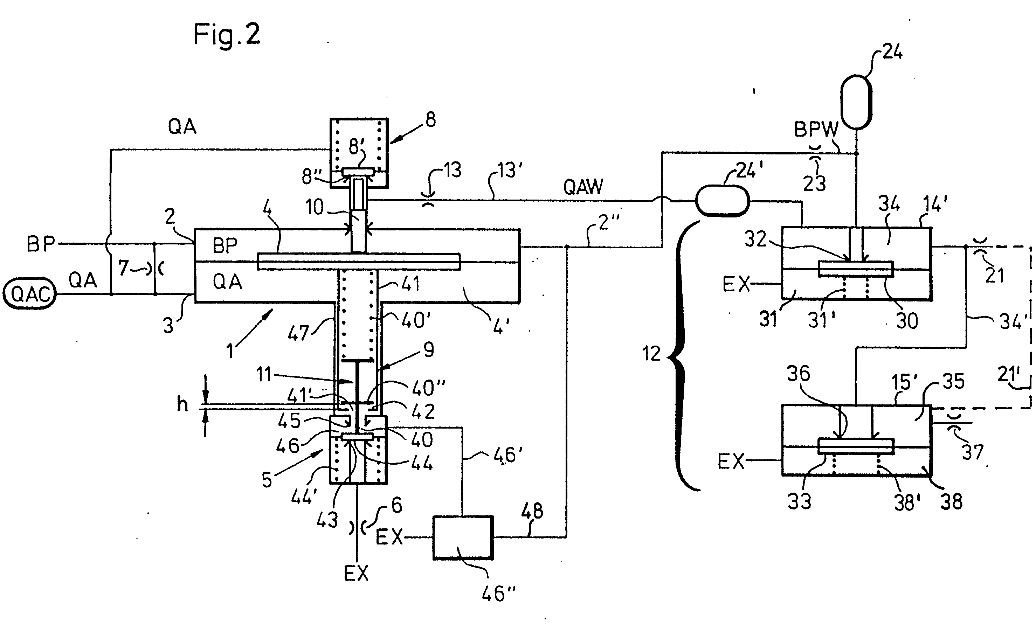

In den Figuren 2 bis 4 sind gleiche oder einander entsprechende Teile mit den gleichen Bezugszeichen versehen.

In den Fig. 2 bis 4 ist ein erstes, als Sensor 8 dienendes Pulsator-Erregerventil zur Erregung eines noch zu beschreibenden Pulsators 12 in eine mit 1 bezeichnete Notbremseinrichtung integriert, um eine erfindungsgemäße Notbrems/Beschleunigerventileinheit zu bilden. Die Einrichtung weist einen an eine Bremsleitung BP angeschlossenen, ersten Eingang 2 und einen an eine Steuerkammer QAC angeschlossenen, zweiten Eingang 3 auf. Weiterhin enthält die Einrichtung 1 einen als Steuerorgan dienenden Notbremskolben 4, der auf seiner einen, oberen Seite vom BP-Druck aus der Bremsleitung BP und auf der anderen Seite vom QA-Druck aus der Steuerkammer QAC beaufschlagt ist, die über eine Fülldüse 7 an die Bremsleitung BP angeschlossen ist.

Auf der BP-Druckseite steuert der Notbremskolben 4 einen Stößel 10, der druckdicht verschieblich durch eine Ventilgehäuseöffnung geführt ist und den Sensor 8 steuert, der über eine QA-Leitung an die Steuerkammer QAC bzw. an die QA-Druckseite des Notbremskolbens angeschlossen ist. Der Sensor 8 besteht aus einer federbelasteten Ventilplatte 8', die in der Ruhestellung einen Ventilsitz 8'' zwischen der QA-Leitung und einer Leitung 13' mit einer Düse 13 abschließt. Bei einer kleineren Druckdifferenz zwischen BP- und QA-Druck, bei der der QA-Druck den BP-Druck übersteigt, bewegt sich der Notbremskolben 4 in der Zeichnung nach oben und öffnet über den Ventilstößel 10 den Sensor 8.

An der QA-Druckseite des Notbremskolbens 4 befindet sich eine Hülse 41, in der ein Stößel 40 verschieblich ist. Zwischen dem Stößel 40 und dem kolbenseitigen Boden der Hülse 41 befindet sich eine Feder 40'. Der Stößel 40 ragt mit seinem einen Ende durch eine zentrale Öffnung 41'. Am unteren Ende der Hülse befindet sich ein Anschlag 42 zum Abfangen des Stößels 40. Die Hülse 41 am Notbremskolben 4 ist in einem Rohr 47 verschieblich, das an den QA-druckseitigen Raum 4' der Notbremseinrichtung 1 anschließt. Am unteren Rohrende ist ein QA-Entlüftungsventil 5 gehalten, das aus einer Ventilplatte 44 besteht, die einen Ventilsitz 43 abzuschließen vermag. Gegen die Ventilplatte 44 wirkt in Öffnungsrichtung eine Feder 44'. Die Federkraft der Feder 44' ist schwächer als die Federkraft der Feder 40''.

Bei BP/QA-Druckgleichheit nimmt der Notbremskolben 4 die in Fig. 2 dargestellte Stellung ein, in der die Ventilsitzplatte 44 auf dem Ventilsitz 43 aufliegt. Das QA-Entlüftungsventil 5 befindet sich daher in seiner Schließstellung. Der Innenraum des Ventilsitzes 43 liegt über eine QA-Entlüftungsdüse 6 an Atmosphäre.

Mit Abstand von dem unteren Ventilsitz 43 ist ein weiterer, oberer Ventilsitz 45 vorgesehen, wobei die Ventilsitze 43 und 45 koaxial zueinander liegen und wobei das untere Ende des Stößels 40 durch den oberen Ventilsitz 45 greift, um sich an der Ventilplatte 44 abzustützen. Die beiden Ventilsitze 43 und 45 befinden sich in einem von QA beaufschlagten Ventilraum 46, an den eine Leitung 46' zu einem hier nur schematisch dargestellten BP-Schnellentlüftungsventil 46'' anschließt, das über eine Leitung 48 an die Bremsleitung BP angeschlossen ist.

Bei einer BP/QA-Druckdifferenz aufgrund eines BP-Druckgradienten, der einen oberen Grenzwert überschreitet, schaltet der Notbremskolben 4 in seine Notbremsstellung. Das heißt, der in der Hülse 41 über einen Abfangflansch 40'' abgefangene Stößel 40 wird zusammen mit der Hülse 41 vom Notbremskolben 4 bei dessen Auslenkung aus der dargestellten Gleichgewichtslage derart in Fig. 2 nach oben bewegt, daß die Ventilplatte 44 durch die Feder 44' den oberen Ventilsitz 45 abzuschließen vermag. Damit ist die Verbindung des Ventilraumes 46 zum offenen Ventilsitz 45 abgesperrt. Andererseits ist der Ventilraum 46 über den offenen Ventilsitz 43 und die Düse 6 an Atmosphäre angeschlossen. Entsprechend ist auch die Leitung 46' nur noch an Atmosphäre angeschlossen, wodurch das vorstehend angesprochene BP-Schnellentlüftungsventil 46 in seine Öffnungsstellung geschaltet wird, um die Bremsleitung BP über einen großen Querschnitt in an sich bekannter Weise zu entlüften.

In der dargestellten Gleichgewichtslage des Notbremskolbens 4 bei Druckgleichheit zwischen dem BP- und dem QA-Druck weist der Abfangflansch 40'' am Stößel 40 von dem Anschlag 42 am Ende der Hülse 41 einen Abstand h auf, der einem Tothub des Notbremskolbens 4 entspricht. Das heißt, der Notbremskolben 4 ist um den Tothub h bei einer BP/QA-Druckdifferenz in der Zeichnung nach oben verschiebbar, um den Sensor 8 sicher in die Öffnungsstellung zu schalten, bevor die Ventilplatte 44 unter der Kraft der Feder 44' von dem Ventilsitz 43 abhebt und anschließend den Ventilsitz 45 abschließt.

Ist der Ventilsitz 43 geöffnet, kann QA-Luft aus der Steuerkammer QAC bzw. aus dem QA-druckseitigen Kolbenraum 4' des Notbremskolbens 4 über die QA-Entlüftungsdüse 6 zur Atmosphäre entweichen. Das untere Ende des von der Feder 40' belasteten Stößels 40 überwacht damit nach Überwinden des Hubes h die Spaltweite, mit der die Ventilplatte 44 des QA-Entlüftungsventils in die Öffnungsstellung gehen kann, d.h., sich vom Ventilsitz 43 abhebt, bevor sie den Ventilsitz 45 abschließt, um die Notbremsung einzuleiten.

Dieser Öffnungsspalt zwischen dem Ventilsitz 43 und der Ventilplatte 44 ist umso größer, je größer der eingesteuerte BP-Druckgradient (Druckabsenkung pro Zeiteinheit) bei einer Betriebsbremsung ist, bei der der gewählte obere Grenzwert über den BP-Druckgradienten nicht überschritten wird und somit keine Notbremsung eingeleitet wird.

Das heißt, der Öffnungsspalt ist umso größer, je stärker der BP-Druck in der Bremsleitung BP gegenüber dem QA-Druck in der Steuerkammer QAC bei einer Betriebsbremsung abgesenkt wird. Über das QA-Entlüftungsventil 43, 44 wird also jeweils mit einem dem jeweiligen BP-Druckgradienten entsprechenden Wert QA-Luft über die Düse 6 zur Atmosphäre abgezapft. Zusätzlich wird QA-Luft über den Sensor 8 abgezapft. Bei kleinen Bremsstufen entsprechend niedrigen Druckänderungen pro Zeiteinheit in der Bremsleitung BP reicht bereits der über den Stößel 10 geöffnete Sensor 8 aus, um die notwendige QA-Luftmenge über die Düse 13 und die Leitung 13' zur Atmosphäre abzuzapfen, ohne daß das Ventil 43, 44 auch nur einen kleinen Spalt geöffnet wird.

Die Hülse 41 am Notbremskolben 4 und der in der Hülse 41 geführte, federbelastete Stößel 40 bilden somit eine mechanische Kupplungseinrichtung 9 zwischen dem Notbremskolben 4 und dem QA-Entlüftungsventil 5. In diese Kupplungseinrichtung 9 ist eine Tothubeinrichtung 11 eingeschaltet, die von dem federbelasteten Stößel 40 mit ihrem Abfangflansch 40'' und dem Anschlag 42 in der Hülse 41 gebildet ist.

Es ist klar, daß der Tothub h entsprechend den jeweiligen Erfordernissen besonders eingestellt werden kann, so daß die Ansprechschwellen der beiden Ventile 5 und 8 genau vorbestimmt werden können.

In Fig.2 ist der schon erwähnte Pulsator mit 12 bezeichnet, der hier von dem beispielsweise in die Notbremseinrichtung 1 integrierten Sensor 8 angesteuert ist. Die Notbremseinrichtung braucht nicht in der vorstehend beschriebenen Weise ausgebildet zu sein. Insbesondere ist es nicht erforderlich, daß ser Sensor 8 über einen Ventilstößel mechanisch vom Notbremskolben gesteuert ist. Ein entsprechender Sensor könnte auch rein druckgesteuert sein.

Der Pulsator 12 besteht nach Fig.2 aus zwei Ventilen 14' und 15'. Das Ventil 14' enthält einen Membrankolben 30, der einerseits von einer Feder 31' beaufschlagt ist und andererseits einen Ventilsitz 32 abzudecken vermag, dessen Innenraum an ein Volumen 24 und über eine Düse 23 in einer Leitung 2'' an den BP-druckseitigen Raum der Notbremseinheit 1 angeschlossen und somit von einem abgeleiteten BPW-Druck beaufschlagt ist.

Der Ventilraum 31 auf der von der Feder 31' beaufschlagten Seite des Membrankolbens 30 ist über eine Offnung Ex ständig zur Atmosphäre entlüftet. Der ventilsitzseitige Ventilraum 34 ist einerseits über eine Düse 21 an Atmosphäre und andererseits über die Leitung 34' an den Innenraum eines Ventilsitzes 36 des zweiten Ventils 15' angeschlossen, der von einem Membrankolben 33 abdeckbar ist. Der Membrankolben 33 ist auf seiner vom Ventilsitz 36 abliegenden Seite von einer Feder 38' belastet. Außerdem ist der Ventilraum 34 des ersten Ventils 14' an ein Volumen 24' und über die die Düse 13 beinhaltende Leitung 13' an den Sensor 8 angeschlossen. Der Kolbenraum 34 ist somit von einem QAW-Druck beaufschlagt, der über die Düse 13 vom QA-Druck der Steuerkammer QAC abgeleitet ist. Der federseitige Ventilraum 38 des zweiten Ventils 15' ist über seine Offnung Ex zur Atmosphäre geöffnet, während der ventilseitige, den Ventilsitz 36 umgebende Ventilraum 35 über eine Düse 37 an Atmosphäre angeschlossen ist.

Der Ausgang der relativ kleinquerschnittigen Düse 21 kann auch über eine gestrichelt dargestellte Leitung 21 an den Ventilraum 35 angeschlossen sein, der den Ventilsitz 36 umgibt, weil die Düse 37 gegenüber der Düse 21 relativ großquerschnittig ist.

Der Beschleuniger nach Fig.2 arbeitet wie folgt:

Bei einer BP/QA-Druckdifferenz am Notbremskolben 4 öffnet dieser den Sensor 8, bevor das QA-Entlüftungsventil 5 öffnet. Letzteres öffnet, wie bereits erwähnt, nur dann, wenn die BP/QA-Druckdifferenz so groß ist, daß die Kolbenbewegung des Notbremskolbens 4 größer ist als der eingestellte Tothub h.

Ist der Sensor 8 geöffnet, so gelangt QA-Luft aus der Steuerkammer QAC über die Düse 13 in die Leitung 13' und in das Volumen 24' und von dort in den Ventilraum 34. Dort staut sich ein QAW-Druck an, da die Düse 21 entsprechend klein gewählt ist. Aus dem BP-Druck hat sich über die Leitung 2'' und die Düse 23 in dem Volumen 24 ein bestimmter BPW-Druck eingestellt, der über die relativ kleine, vom Ventilsitz 32 umschlossene Fläche nur unwesentlich auf den Membrankolben 30 einwirkt.

Über die Leitung 34' staut sich QAW-Luft auch in dem vom Ventilsitz 36 umschlossenen, inneren Raum des zweiten Ventils 15' an. Die beiden Ventile 14' und 15' sind derart ausgelegt, daß das erste Ventil 14' z.B. bei ca. 1 bar angestautem QAW-Druck aufschaltet. Dabei schießt der relativ höher angestaute BPW-Druck aus dem Volumen 24 über den offenen Ventilsitz 32 in den Ventilraum 34 ein und bildet mit dem hier angestauten QAW-Druck einen höheren Mischdruck von z.B. 2,5 bar bis 3,0 bar, der über die Leitung 34' zum Ventilsitz 36 gelangt und mit zeitlicher Verzögerung gegenüber dem ersten Ventil 14' das zweite Ventil 15' aufschaltet. Über das geöffnete zweite Ventil 15' wird der Mischdruck über die Düse 37 zur Atmosphäre abgebaut. Gleichzeitig wird aber der Mischdruck bei geöffnetem ersten Ventil 14' über die Düse 21 abgebaut. Die Düsen 21 und 37 sind derart gewählt, daß trotz Luftnachspeisung durch die Düse 13 und Leitung 13' sowie die Leitung 2'' und die Düse 23 in den Ventilräumen 34 und 35 eine Druckabsenkung eintritt, so daß die Ventile 14' und 15' wieder schließen; die Membrankolben 30 und 33 und die Federn 31' und 38' sind dabei derart bemessen, daß das erste Ventil 14' vor dem zweiten Ventil 15' zurück in die Schließstellung geschaltet wird. Z.B. schaltet das erste Ventil bei ca. 1 bar und das zweite Ventil bei ca. 0,1 bar bis 0,5 bar zurück.

Es kann zweckmäßig sein, die erste Düse 13 und die zweite Düse 21 etwa gleich groß zu wählen.

Es ist klar, daß die vorstehenden Größenangaben nur beispielsweise gelten und zur Verdeutlichung der Funktion des Beschleunigers beitragen sollen, ohne daß die Erfindung auf diese Angaben beschränkt aufzufassen ist.

Wenn das erste Ventil 14' und anschließend das zweite Ventil 15' in ihre Schließstellung zurückgeschaltet haben, vermag sich über die Düse 13 wieder QAW-Druck in dem äußeren Ventilraum 34 des ersten Ventils 14' und in dem inneren, vom Ventilsitz 36 umschlossenen Raum des zweiten Ventils 15' aufzubauen. Außerdem baut sich über die Düse 23 erneut ein bestimmter BPW-Druck in dem Volumen 24 auf, bis die Ventile 14' und 15' erneut in die öffnungsstellung gehen. Damit pulsieren also beide Ventile 14' und 15' im Rhytmus des QAW-Druckanstaues und das QAW/BPW-Mischdruckabbaues zueinander phasenverschoben, wobei stets das erste Ventil 14' zuerst in die öffnungs- und auch zuerst wieder in die Schließstellung geht.

Aufgrund der Mischdruckbildung durch Zuleitung eines besonders bemessenen BPW-Druckes zu dem angestauten QAW-Druck wird ein sicheres Schalten der beiden Ventile 14' und 15' erreicht, wobei im Takt der beiden Ventile ein Luftgemisch aus der Bremsleitung BP und der Steuerkammer QAC abgezapft wird. Dabei ist durch die Düse 21 sichergestellt, daß die Ventile 14' und 15' erst zu takten beginnen, wenn die Druckabsenkung von BP einen Mindestwert überschritten hat. Bei kleineren Druckabsenkungen von BP, wie sie durch Undichtigkeiten in der Bremsleitung verursacht werden, wird ein Schalten der Ventile 14' und 15' vermieden. Die Einstellung des Mindestdruckes, bei dem die Ventile 14' und 15' zu takten beginnen, läßt sich bei dem Pulsator 12 leicht einstellen.

Es ist klar, daß das erste Ventil 14' auch derart ausgebildet sein kann, daß es einen einerseits vom QAW-Druck beaufschlagten, andererseits an Atmosphäre liegenden Membrankolben aufweist, der beim Erreichen des QAW-Schaltdruckes über einen Stößel ein federbelastetes, gesondertes Sitzventil entsprechend dem Ventilsitz 32 aufstößt, durch das BPW-Luft aus dem Volumen 24 zum Innenraum des Ventilsitzes 36 des zweiten Ventils 15' strömt.

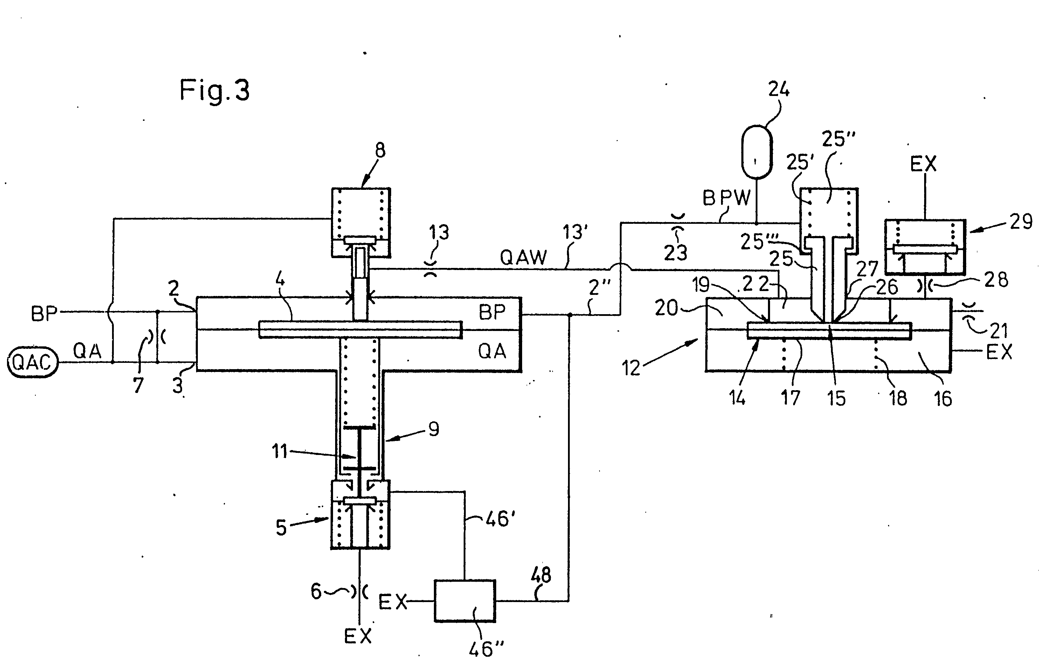

Die Fig. 3 zeigt die Notbremseinrichtung 1 entsprechend der Fig. 2 in Verbindung mit einem geänderten Pulsator 12. Auch dieser Pulsator 12 muß nicht notwendigerweise mit der speziellen Notbremseinrichtung 1 verbunden sein. Die Ausführungen zum Puslator 12 nach Fig. 2 gelten entsprechend auch für den Pulsator 12 nach Fig. 3. Der Pulsator 12 nach Fig.3 weist zwei Ventile 14 und 15 und ein zusätzliches, federbelastetes Rückschlagventil 29 auf.

Das Ventil 14 ist von einem Membrankolben 17 gebildet, der zu seiner einen Seite einen Ventilsitz 19 abzudecken vermag. Gegen die andere Seite des Membrankolbens 17 drückt eine Feder 18 in einem entlüfteten Raum 16. In den vom Ventilsitz 19 umgebenen Ventilsitzraum 22 ragt durch eine abgedichtete Öffnung 27 ein durch einen Gehäuseanschlag 25'' nur begrenzt verschiebliches Ventilrohr 25, das von einer Feder 25' in einem Raum 25'' belastet ist. Das Ende des Ventilsrohres 25 ist als Ventilsitz 26 ausgebildet, dessen Öffnung ebenfalls von dem Membrankolben 17 verschließbar ist. Der Raum 25'' des Ventils 15 ist an das Volumen 24 und über die Leitung 2'' und die Düse 23 an den BPbeaufschlagten Kolbenraum des Notbremsteils 1 bzw. an die Bremsleitung BP angeschlossen. Der vom Ventilsitz 19 umfaßte, innere Ventilsitzraum 22 ist über die Leitung 13' und die Düse 13 an den Sensor 8 angeschlossen. An den den Ventilsitz 19 umfassenden, äußeren Ventilraum 20 ist über eine Düse 28 das Rückschlagventil 29 angeschlossen, das in seiner Öffnungsstellung den Ventilraum 20 an die Atmosphäre anschließt. Die Düse 13 hat z.B. einen Durchmesser von 0,3 mm, während die Düse 23 einen Durchmesser von z.B. 0,8 mm aufweisen kann. Die Düse 21 und die Düse 28 haben z.B. einen Durchmesser von 1,0 bis 2,0 mm bzw. 1,5 bis 2,5 mm. Diese Angaben sollen das Verständnis für die Funktion des Pulsators erläutern, ohne die Erfindung zu beschränken.

Der Beschleuniger nach Fig. 3 arbeitet wie folgt:

Bei geöffnetem Sensor 8 gelangt über die Düse 13 QA-Luft als QAW-Druck in den inneren Ventilsitzraum 22 und staut sich dort auf, bis der angestaute QAW-Druck den Membrankolben 17 in die Öffnungsstellung schaltet. Das Volumen 24 und der Federraum 25'' für das Ventilrohr 25 sind über die Düse 23 an die Bremsleitung BP angeschlossen, so daß sich in ihnen ein bestimmter BPW-Druck angestaut hat, bevor der Membrankolben 17 das Ventil 14 und, durch die Verschieblichkeit des Ventilrohres 25 und dessen Gehäuseanschlag 25'' zeitlich etwas nachfolgend, das Ventil 15 aufschaltet. Im geöffneten Zustand des Ventils 14 bildet sich in den Ventilräumen 20, 22 ein Mischdruck, der ein rasches Durchschalten des Membrankolbens 17 zum Öffnen des Ventils 15 bewirkt, woraufhin der sich nun bildende BPW/QAW-Mischdruck über die Düse 21 und die Düse 28 mit dem nachgeschalteten Rückschlagventil 29 abgebaut wird und sodann der Membrankolben 17 wieder in seine Schließstellung geht, um die Ventilsitze 19 und 26 erneut zu schließen. Es können sich damit erneut im Pulsator 12 QAW- und BPW-Drücke aufbauen und der vom angestauten QAW-Druck erneut in die Öffnungsstellung geschaltete Membrankolben 17 ermöglicht erneut eine QAW/BPW-Mischdruckbildung mit einem erneuten Abbau des Mischdruckes über die beiden Düsen 21 und 28. Auch dieser Pulsator 12 taktet damit im Rhytmus des Druckanstaues von QAW-Druck im Ventilsitzraum 22 und des Abbaues des QAW/BPW-Mischdruckes über die Düsen 21 und 28.

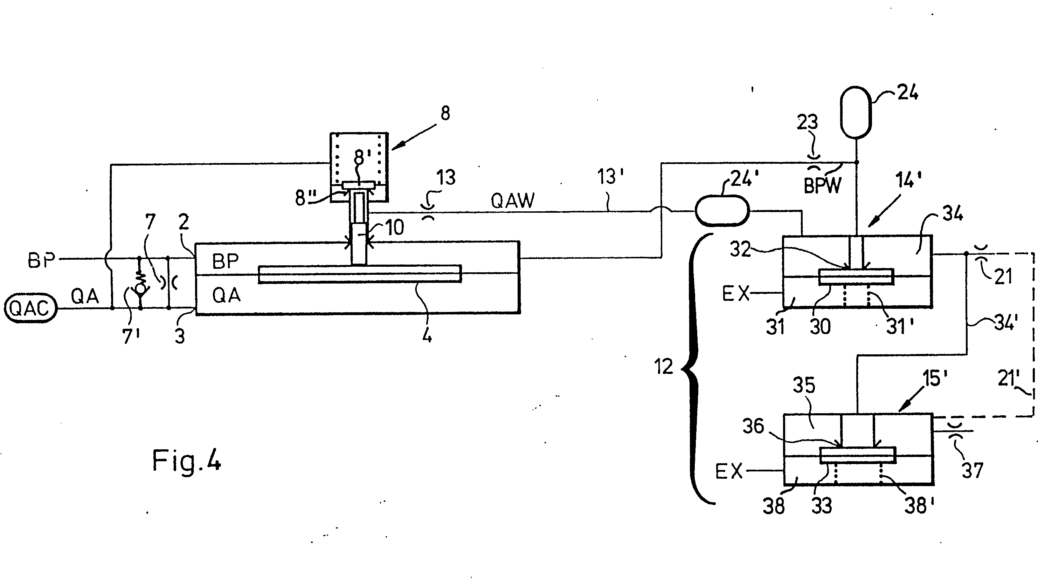

Die Fig.4 zeigt ein separates Beschleunigerventil, das nach Wahl zusätzlich z.B. zu einer Notbrems-/Beschleuniger-Ventileinheit nach Figuren 2 oder 3 verwendet werden kann, wie bereits eingangs erläutert wurde. Das Beschleunigerventil enthält einen Druckvergleicher, z.B. einen Membrankolben 4, der einerseits über einen Eingang 2 aus der Bremsleitung BP und andererseits über einen Eingang 3 aus einer Steuerkammer QAC druckbeaufschlagt ist. Der Membrankolben 4 überwacht über einen Stößel 10 ein als Sensor 8 dienendes Pulsator-Erregerventil, entsprechend dem Sensor 8 nach den Fig.2 und 3. Der Sensor 8 weist eine federbelastete Ventilplatte 8' auf, die einen Ventilsitz 8'' abzuschließen vermag, der in der Öffnungsstellung eine QA-Leitung über eine Düse 13 - entsprechend der Düse 13 in Fig.2 oder 3 - an einen Pulsator 12 entsprechend dem Pulsator 12 in Fig.2 anschließt.

Das Beschleunigerventil nach Fig.4 ist an eine Steuerkammer QAC angeschlossen, wobei zwischen der Bremsleitung BP und der Steuerkammer QAC ein Rückschlagventil 7' und parallel dazu eine Fülldüse 7 angeordnet sind, wie es an sich bekannt ist. Das Rückschlagventil 7' sperrt von BP nach QA und öffnet von QA nach BP.

Das Ventil 14' des Pulsators 12 kann auch derart ausgebildet sein, daß es einen einerseits von QA-Luft beaufschlagten, andererseits an Atmosphäre liegenden Membrankolben aufweist, der beim Erreichen des QA-Schaltdruckes über einen Stößel ein federbelastetes Sitzventil ähnlich dem Ventil 8 aufstößt, welches das BP-Volumen 24 zum inneren Raum des Ventilsitzes 36 des zweiten Ventils 15' schaltet.

Weiterhin kann der Pulsator 12 nach Fig.4 auch durch den Pulsator 12 nach Fig.3 ersetzt sein.

Der Beschleuniger nach Fig.4 in Verbindung mit einem der erfindungsgemäßen Pulsatoren 12 nach Fig.2 oder 3 kann aber auch als ein Ventilbauteil an eine herkömmliche Notbremseinheit angeflanscht werden, die noch mit keinem Beschleuniger ausgerüstet ist, um dadurch eine Notbrems-/Beschleuniger-Ventileinheit zu bilden. Der Beschleuniger kann darüber hinaus auch eine separate Ventileinheit bilden, die zusätzlich parallel zu Notbrems-/Beschleuniger-Ventileinheiten geschaltet werden kann, wie eingangs schon erwähnt.

Die Ventileinheit nach Fig.2 oder 3, bei der der Sensor 8 jeweils mit der Notbremseinheit 1 eines nicht weiter dargestellten Bremssteuerventils zu einer Beschleuniger/Notbrems-Ventileinheit kombiniert ist, überwacht drei Ventileinrichtungen:

Die erste Ventileinrichtung ist der Sensor 8, die zweite Ventileinrichtung das Entlüftungsventil 5, ist in die Verbindung zwischen die Steuerkammer QAC und die Entlüftungsdüse 6 zur Atmosphäre eingeschaltet, und die dritte Ventileinrichtung 44, 45 schließt die mit dem Schnellbremsventil 46'' in Verbindung stehende Leitung 46' über die offene, zweite Ventileinrichtung 5 und die Entlüftungsdüese 6 an Atmosphäre an und sperrt gleichzeitig die Verbindung der Steuerkammer QAC zu dem Ventilraum 46 ab.

Bei geringen Druckabsenkungen pro Zeiteinheit in der Bremsleitung BP, die einen unteren Grenzwert nicht überschreiten und die vor allem nur auf Druckverluste in der Bremsleitung BP zurückzuführen sind, nicht jedoch von einer Betriebsbremsung herrühren, wird zur Angleichung des etwas höheren Druckes in der Steuerkammer QAC an den nur relativ langsam abfallenden Druck in der Bremsleitung BP vom Notbremskolben 4 nur der Sensor 8 aufgesteuert, ohne daß - infolge des Tothubes h - auch das Ventil 5 geöffnet wird. Hierdurch gelangt Luft aus der Steuerkammer QAC über den offenen Sensor 8 und die Düse 13 zum Pulsator 12, wo die Steuerkammerluft schleichend zur Atmosphäre abströmt, ohne daß dabei der Pulsator 12 zu pulsieren beginnt. Es wird also durch den Pulsator keine Luft aus der Bremsleitung BP abgezapft, was in dieser Situation auch nicht erwünscht wäre, da ja die angenommene, geringe Druckerniedrigung in der Bremsleitung BP nicht auf einer Betriebs- bzw. Regelbremsung beruht.

Bei relativ höheren Druckabsenkungen pro Zeiteinheit in der Bremsleitung BP, die den unteren Grenzwert überschreiten und die auf eine Betriebs- bzw. Regelbremsung für die niedrigste oder eine relativ niedrige Bremsstufe zurückzuführen sind, wird von dem Kolben 4 weiterhin nur der Sensor 8 aufgesteuert, während das Entlüftungsventil 5 geschlossen bleibt. Die jetzt über den geöffneten Sensor 8 zum Pulsator 12 strömende Luft aus der Steuerkammer QAC bringt diesen nunmehr zum Takten, so daß mit der Taktfrequenz des Pulsators 12 QAW/BPW-Mischdruckimpulse zur Atmosphäre abgezapft werden.

Wird dagegen eine mittlere bis höhere Bremsstufe eingesteuert, ist der Druckgradient in der Bremsleitung BP derart steiler, daß die nötige Menge der QA-Luft aus der Steuerkammer QAC nicht mehr allein über den offenen Sensor 8 und den angeschlossenen Pulsator 12 zur Atmosphäre abgeleitet werden kann. Der Notbremskolben 4 steuert in einem solchen Falle nicht nur den Sensor 8, sondern auch das Entlüftungsventil 5 auf, wodurch die Steuerkammer QAC zusätzlich über die Entlüftungsdüse 6 an Atmosphäre angeschlossen wird. Hierdurch läßt sich der Steuerkammerdruck QA rasch an den in Abhängigkeit von der jeweiligen eingesteuerten Betriebsbremsstufe abfallenden Bremsleitungsdruck BP anpassen, ohne daß eine Schnellbremsung ausgelöst wird. QA-Luft aus der Steuerkammer QAC wird dabei aber nicht nur über die Entlüftungsdüse 6, sondern auch über den offenen Sensor 8 und den taktenden Pulsator 12 zur Atmosphäre abgeleitet.

Ist bei einer Notsituation die Druckabsenkung in der Bremsleitung BP pro Zeiteinheit so groß, daß ein oberer Grenzwert überschritten wird, dann steuert der Notbremskolben 4 das Ventil 44, 45 in seine Schließstellung, während die Ventile 8 und 5 in der Öffnungsstellung verbleiben. Hierdurch wird die Leitung 46' zum Schnellentlüftungsventil 46'' über die Düse 6 an Atmosphäre gelegt, woraufhin in an sich bekannter Weise das Schnellentlüftungsventil 46'' in seine Öffnungsstellung gesteuert wird. Die Bremsleitung BP wird dadurch über die Leitung 48 und einen nicht dargestellten, bekannten, großquerschnittigen Ventilsitz an Atmosphäre geschaltet. Hierdurch erfolgt in bekannter Weise eine rasche Entlüftung der Bremsleitung BP.

## Patentansprüche

1. Pulsierend arbeitende Bremsbeschleuniger-Einrichtung für eine indirekt wirkende Druckluftbremse für Schienenfahrzeuge, die folgende Merkmale aufweist:
- der Bremsbeschleuniger (4, 8, 12) arbeitet bei jeder Bremsstufe einer Betriebsbremsung (Regelbremsung);

- der Bremsbeschleuniger besitzt eine erste Eintrittsöffnung (2) für Bremsleitungsdrucksignale und eine zweite Eintrittsöffnung (3) für Bezugsdrucksignale;

- die Bezugsdrucksignale stammen aus einer Steuerkammer (QAC), die über eine Fülldüse (7) an die Bremsleitung (BP) angeschlossen ist;

- der Bremsbeschleuniger (4,8,12) besitzt ein Steuerorgan (4), das auf Druckunterschiede der beiden Drucksignale an den beiden Eintrittsöffnungen (2,3) anspricht;

- das Steuerorgan (4) überwacht ein erstes, als Sensor (8) ausgebildetes Erregerventil zum Betrieb eines Pulsators (12);

- der Sensor (8) ist einerseits an die Steuerkammer (QAC) und andererseits über eine erste, einen ersten, abgeleiteten Druck (QAW) aus dem Druck der Steuerkammer (QAC) bildende Düse (13) an den Pulsator (12) angeschlossen;

- der Pulsator (12) ist über eine zweite, einen zweiten abgeleiteten Druck (BPW) aus dem Druck der Bremsleitung (BP) bildende Düse (23) an die Bremsleitung (BP) angeschlossen; bei jeder Bremsstufe zapft der Pulsator (12) taktweise Druckluftimpulse von den beiden abgeleiteten Drücken (BPW/QAW) zur Atmosphäre ab, wobei gleichzeitig der Bremsleitungsdruck und der Steuerkammerdruck über den Pulsator (12) erniedrigt werden; gekennzeichnet durch folgende Merkmale:

- der Pulsator (12) bildet einen Mischdruck aus dem ersten abgeleiteten Druck (QAW) und dem zweiten abgeleiteten Druck (BPW);

- der Mischdruck beaufschlagt zumindest einen Ventilkolben (30,17) des Pulsators (12) in Öffnungsrichtung eines Einlaßventils (Ventilsitz 32,26) für den zweiten abgeleiteten Druck (BPW) in einen den Mischdruck aufnehmenden Ventilraum (34, 22) des Pulsators (12);

- der Pulsator zapft bei jeder Bremsstufe Mischdruckimpulse zur Atmosphäre ab.

2. Bremsbeschleuniger-Einrichtung nach Anspruch 1, dadurch gekennzeichnet,

- daß der Pulsator (12) aus zwei Ventilen (14', 15') besteht;

- daß das erste Ventil (14') einen ersten Ventilkolben (30) aufweist, der einen ersten Ventilraum (34) von einem zweiten Ventilraum (31) trennt, daß der erste Ventilraum (34) an ein erstes Volumen (24') und über die erste Düse (13) an den Sensor (8) angeschlossen ist, daß weiterhin der erste Ventilraum (34) über eine dritte Düse (21) an Atmosphäre liegt, und daß der zweite Ventilraum (31) zur Atmosphäre offen ist; - daß in dem ersten Ventilraum (34) sich ein erster Ventilsitz (32) befindet, der von dem ersten Ventilkolben (30) verschließbar ist und dessen Innenraum an ein zweites Volumen (24) und über die zweite Düse (23) an die Bremsleitung (BP) angeschlossen ist, daß in dem zweiten Ventilraum (31) sich eine erste Feder (31') befindet, die den ersten Ventilkolben (30) in Schließrichtung des ersten Ventilsitzes (32) belastet;

- daß das zweite Ventil (15') einen zweiten Ventilkolben (33) aufweist, der einen dritten Ventilraum (35) von einem vierten Ventilraum (38) trennt, wobei der dritte Ventilraum (35) über eine vierte Düse (37) an Atmosphäre gelegt ist, daß der vierte Ventilraum (38) zur Atmosphäre offen ist, daß in dem dritten Ventilraum (35) sich ein zweiter Ventilsitz (36) befindet, der von dem zweiten Ventilkolben (33) verschließbar ist und dessen Innenraum an den ersten Ventilraum (34) angeschlossen ist, daß in dem vierten Ventilraum (38) sich eine zweite Feder (38') befindet, die den zweiten Ventilkolben (33) in Schließrichtung des zweiten Ventilsitzes (36) belastet, und daß die dritte Düse (21) im Querschnitt wesentlich kleiner gewählt ist als die vierte Düse (37).

3. Bremsbeschleuniger-Einrichtung nach Anspruch 2, dadurch gekennzeichnet, daß der erste Ventilraum (34) über die dritte Düse (21) an den dritten Ventilraum (35) angeschlossen ist.

4. Bremsbeschleuniger-Einrichtung nach Anspruch 2 oder 3, dadurch gekennzeichnet, daß die erste und die dritte Düse (13,21) annähernd gleich groß und jeweils kleiner sind als die zweite und die vierte Düse (23,37) und daß die vierte Düse (37) größer als die zweite Düse (23) ist.

5. Bremsbeschleuniger-Einrichtung nach Anspruch 2, dadurch gekennzeichnet, daß die beiden Ventile (14', 15) des Pulsators (12) im Rhythmus des Druckstaues des QAW-Druckes und des Druckabbaues des QAW/BPW-Mischdruckes phasenversetzt zueinander pulsieren, wobei jeweils das erste Ventil (14') vor dem zweiten Ventil (15') in seine Öffnungs- bzw. Schließrichtung schaltet.

6. Bremsbeschleuniger-Einrichtung nach Anspruch 1, dadurch gekennzeichnet, daß der Pulsator (12) aus zwei Ventilen (14,15) besteht, mit den Merkmalen:

- das erste Ventil (14) weist einen Ventilkolben (17) auf, der einen ersten Ventilraum (20) von einem zweiten Ventilraum (16) trennt; der erste Ventilraum (20) liegt über eine dritte Düse (21) an Atmosphäre; in dem ersten Ventilraum befindet sich ein erster Ventilsitz (19), der von dem Kolben (17) verschließbar ist und dessen Innenraum (Ventilsitzraum 22) über die erste Düse (13) an den Sensor (8) angeschlossen ist;

- innerhalb des ersten Ventilsitzes (19) befindet sich ein zweiter Ventilsitz (26) am Ende eines Ventilrohres (25), das in einer Öffnung (25") eines dritten Ventilraumes (25''') axial verschieblich geführt ist, und dort von einer ersten Feder (25') in Richtung zum Ventilkolben (17) belastet ist; der dritte Ventilraum (25''') ist an ein Volumen (24) und über die zweite Düse (23) an die Bremsleitung (BP) angeschlossen;

- in dem zweiten Ventilraum (16) befindet sich eine zweite Feder (18), die den Ventilkolben (17) in Richtung zu den beiden Ventilsitzen (19,26) belastet; der Ventilkolben (17) überwacht sowohl den ersten wie den zweiten Ventilsitz; der zweite Ventilraum (16) ist zur Atmosphäre offen.

7. Bremsbeschleuniger-Einrichtung nach Anspruch 6, dadurch gekennzeichnet, daß der erste Ventilraum (20) über eine vierte Düse (28) an ein Rückschlagventil (29) angeschlossen ist, das in seiner Öffnungsstellung den ersten Ventilraum (20) zusätzlich zu der dritten Düse (21) an Atmosphäre anschließt.

8. Bremsbeschleuniger-Einrichtung nach Anspruch 6 und 7, dadurch gekennzeichnet, daß die erste und die zweite Düse (13,23) jeweils kleiner als die dritte und die vierte Düse (21,28) sind, wobei die erste Düse (13) kleiner als die zweite Düse (23) und die vierte Düse (28) größer als die dritte Düse (21) ist.

9. Bremsbeschleuniger-Einrichtung nach Anspruch 1, dadurch gekennzeichnet, daß der Beschleuniger (4,8,12) als Ventilbaueinheit an ein Notbremsteil eines Bremssteuerventils anflanschbar ist und mit diesem eine Notbrems-/Beschleuniger-Ventileinheit bildet.

10. Bremsbeschleuniger-Einrichtung nach Anspruch 1, dadurch gekennzeichnet, daß der Beschleuniger (4,8,12) eine separate Ventilbaueinheit bildet, wobei parallel zu der Fülldüse (7) ein Rückschlagventil (7') geschaltet ist, das in Strömungsrichtung von der Steuerkammer (QAC) zur Bremsleitung (BP) öffnet und von der Bremsleitung (BP) zur Steuerkammer (QAC) schließt.

11. Bremsbeschleuniger-Einrichtung nach Anspruch 1, dadurch gekennzeichnet, daß das Steuerorgan (4) zugleich als Notbremskolben ausgebildet ist und eine Beschleuniger-/Notbremskolben-Einheit bildet, die außer dem Sensor (8) eine zweite Ventileinrichtung (Entlüftungsventil 5) in einem ersten Druckluftverbindungsweg (3,4',47) zwischen der Steuerkammer (QAC) und einer Entlüftungsdüse (6) und zusätzlich eine dritte Ventileinrichtung (44,45) für einen zweiten Druckluftverbindungsweg (Leitungen 2,2'',48 und Schnellentlüftungsventil 46'') zwischen der Bremsleitung (BP) und der Atmosphäre überwacht.

12. Bremsbeschleuniger-Einrichtung nach Anspruch 11, dadurch gekennzeichnet, daß das Steuerorgan (4) über je eine Kupplungsvorrichtung (Stößel 10; 9) mit dem Sensor (8) und der zweiten Ventileinrichtung (5) mechanisch verbunden ist und daß in die Kupplungseinrichtung (9) zwischen dem Steuerorgan (4) und der zweiten Ventileinrichtung (5) eine Tothubeinrichtung (11) eingeschaltet ist, derzufolge bei einer Druckerniedrigung in der Bremsleitung (BP) der Sensor (8) zeitlich vor der zweiten Ventileinrichtung (5) in Öffnungsstellung geht und bei einer Druckangleichung des Steuerkammerdruckes (QA) an den Bremsleitungsdruck (BP) die zweite Ventileinrichtung (5) vor dem Sensor (8) in Schließstellung geht.

13. Bremsbeschleuniger-Einrichtung nach Anspruch 12, dadurch gekennzeichnet, daß die Tothubeinrichtung (11) des Steuerorgans (4) aus einem federbelasteten Ventilstößel (40) besteht, der in einer am Steuerorgan (4) festen Hülse (41) längsverschieblich geführt ist und mit seinem aus der Hülse (41) herausragenden Ende die zweite Ventileinrichtung (5) kontrolliert, und daß in der Hülse (41) ein Anschlag (42) zum Abfangen des Stößels (40) vorhanden ist.

14. Bremsbeschleuniger-Einrichtung nach Anspruch 13, dadurch gekennzeichnet, daß die zweite Ventileinrichtung (5) aus einem Ventilsitz (43) und einer Ventilplatte (44) besteht, die in Öffnungsrichtung der zweiten Ventileinrichtung (5) von einer ersten Federkraft (44') belastet ist, daß der Ventilsitz (43) an die Entlüftungsdüse (6) angeschlossen ist und daß eine den Ventilstößel (40) belastende, zweite Federkraft (40') stärker bemessen ist, als die die Ventilplatte (44) belastende, erste Federkraft (44').

15. Bremsbeschleuniger-Einrichtung nach Anspruch 14, dadurch gekennzeichnet, daß der maximale Tothub (h) zwischen dem Anschlag (42) und dem Ventilstößel (40) bei Druckgleichheit von Bremsleitungsdruck (BP) und Steuerkammerdruck (QA) vorhanden ist, wobei die Ventilplatte (44) durch den Ventilstößel (40) in ihrer Schließstellung gehalten ist.

16. Bremsbeschleuniger-Einrichtung nach Anspruch 14 oder 15, dadurch gekennzeichnet, daß die erste Ventileinrichtung (Entlüftungsventil 5) einen zweiten Ventilsitz (45) aufweist, daß die Ventilplatte (44) in einem Ventilraum (46) beweglich angeordnet ist und die Schließstellung beider Ventilsitze (43,45) überwacht, und daß der Ventilraum (46) durch den zweiten Ventilsitz (45) mit der Steuerkammer (QAC) in Verbindung steht und an ein Schnellentlüftungsventil (46'') für die Bremsleitung (BP) angeschlossen ist.

17. Bremsbeschleuniger-Einrichtung nach Anspruch 16, dadurch gekennzeichnet, daß die beiden Ventilsitze (43,45) den Ventilraum (46) begrenzen und sich einander gegenüberliegen, daß das freie Ende des Stößels (40) durch den zweiten Ventilsitz (45) ragt und in Richtung auf die Ventilplatte (44) weist und daß die Hülse (41) am Notbremskolben (Steuerorgan 4) mit Spiel in einem Rohr (47) verschieblich ist, das einerseits an den vom QA-Druck beaufschlagten Kolbenraum (4') zur einen Seite des Notbremskolbens (Steuerorgan 4) und andererseits an den zweiten Ventilsitz (45) angeschlossen ist.

18. Bremsbeschleuniger-Einrichtung nach Anspruch 11, dadurch gekennzeichnet,
- daß bei geringen Druckabsenkungen pro Zeiteinheit in der Bremsleitung (BP), die einen unteren Grenzwert nicht überschreiten, zur Angleichung des höheren Steuerkammerdruckes (QA) an den langsamen abfallenden Bremsleitungsdruck (BP) das Steuerorgan (4) nur den Sensor (8) aufsteuert, wobei Luft aus der Steuerkammer (QAC) über die erste Düse (13) und den Pulsator (12) schleichend zur Atmosphäre entweicht, ohne daß der Pulsator (12) taktet;
- daß bei einer den unteren Grenzwert überschreitenden Druckabsenkung pro

Zeiteinheit in der Bremsleitung (BP) zur Einleitung einer relativ niedrigen Bremsstufe das Steuerorgan (4) weiterhin nur den Sensor (8) aufsteuert, wobei der Pulsator (12) erregt wird, der einen QAW/BPW-Mischdruck zur Atmosphäre abzapft,

- daß bei Einleitung einer mittleren bis höheren Bremsstufe das Steuerorgan (4) zusätzlich zum Sensor (8) auch die zweite Ventileinrichtung (Entlüftungsventil 5) aufsteuert, wodurch sowohl der Pulsator (12) zum Pulsieren gebracht wird als auch QA-Luft aus der Steuerkammer (QAC) über die Entlüftungsdüse (6) zur Atmosphäre geleitet wird, und

- daß bei einer einen oberen Grenzwert überschreitenden Druckabsenkung pro Zeiteinheit in der Bremsleitung (BP) zur Auslösung einer Schnellbremsung das Steuerorgan (4) bei geöffnetem Sensor (8) und geöffneter zweiter Ventileinrichtung (5) die dritte Ventileinrichtung (44,45) geschlossen wird, um das Schnellentlüftungsventil (46") zur Auslösung zu bringen.

**Claims**

1. Pulsating brake accelerator device for an indirectly working air pressure brake for rail vehicles, which has the following features:
- the brake accelerator (4, 8, 12) works at each braking stage of a service braking operation (regulating braking); - the brake accelerator has a first inlet aperture (2) for brake line pressure signals, and a second inlet aperture (3) for reference pressure signals;
- the reference pressure signals originate from a control chamber (QAC) which is attached by means of a filling nozzle (7) to the brake line (BP);
- the brake accelerator (4, 8, 12) has a control element (4) which responds to pressure differences in the two pressure signals at both the inlet apertures (2, 3);
- the control element (4) monitors a first exciter valve constructed as a sensor (8) for operation of a pulsator (12);
- the sensor (8) is connected on the one hand to the control chamber (QAC) and on the other hand to the pulsator (12) via a first nozzle (13) providing a first pressure (QAW) derived from the pressure of the control chamber (QAC);
- the pulsator (12) is connected to the brake line (BP) via a second nozzle (23) providing a second pressure (BPW) derived from the pressure in the brake line (BP); at each braking stage the pulsator (12) taps air pressure pulses in cycles from the two derived pressures (BPW/QAW) to the atmosphere, whereby at the same time the brake line pressure and the control chamber pressure are lowered by means of the pulsator (12); characterised by the following features:
- the pulsator (12) forms a mixed pressure from the first derived pressure (QAW) and the second derived pressure (BPW); - the mixed pressure acts at least on one valve piston (30, 17) of the pulsator (12) in the opening direction of an inlet valve (valve seat 32, 26) for the second derived pressure (BPW) opening into a valve chamber (34, 22) of the pulsator (12) receiving the mixed pressure;
- the pulsator taps mixed pressure pulses to the atmosphere at each braking stage.

2. Brake accelerator device according to claim 1, characterised in that the pulsator (12) comprises two valves (14', 15');
- in that the first valve (14') has a first valve piston (30) which separates a first valve chamber (34) from a second valve chamber (31), in that the first valve chamber (34) is connected to a first volume (24') and to the sensor (8) via the first nozzle (13'), in that furthermore the first valve chamber (34) communicates with the atmosphere via a third nozzle (21), and in that the second valve chamber (31) is open to the atmosphere;
- in that in the first valve chamber (34) there is a first valve seat (32) which can be closed by the first valve piston (30) and whose inner chamber is connected to a second volume (24) and via the second nozzle (23) to the brake line (BP), in that in the second valve chamber (31) there is a first spring (31') which loads the first valve piston (30) in the closing direction of the first valve seat (32);
- in that the second valve (15') has a second valve piston (33) which separates a third valve chamber (35) from a fourth valve chamber (38), whereby the third valve chamber (35) communicates with the atmosphere via a fourth nozzle (37), in that the fourth valve chamber (38) is open to the atmosphere, in that in the third valve chamber (35) there is a second valve seat (36) which can be closed by the second valve piston (33) and whose inner chamber is connected to the first valve chamber (34), in that in the fourth valve chamber (38) there is a second spring (38') which loads the second valve piston (33) in the closing direction of the second valve seat (36), and in that the third nozzle (21) is selected to be substantially smaller than the fourth nozzle (37) in cross section.

3. Brake accelerator device according to claim 2, characterised in that the first valve chamber (34) is connected to the third valve chamber (35) via the third nozzle (21).

4. Brake accelerator device according to claim 2 or 3, characterised in that the first and the third nozzle (13, 21) are approximately the same size and are respectively smaller than the second and the fourth nozzle (23, 37), and in that the fourth nozzle (37) is larger than the second nozzle (23).

5. Brake accelerator device according to claim 2, characterised in that the two valves (14', 15') of the pulsator (12) pulsate, phase-shifted with respect to each other, in the rhythm of the pressure build-up of the QAW pressure and of the pressure reduction of the QAW/BPW mixed pressure, whereby respectively the first valve (14') switches into its opening- or closing-direction before the second valve (15,').

6. Brake accelerator device according to claim 1, characterised in that the pulsator (12) comprises two valves (14, 15), with the features:

- the first valve (14) has a valve piston (17) which separates a first valve chamber (20) from a second valve chamber (16); the first valve chamber (20) communicates via a third nozzle (21) with the atmosphere; in the first valve chamber there is a first valve seat (19) which can be closed by the piston (17) and whose inner chamber (valve seat chamber 22) is attached via the first nozzle (13) to the sensor (8);

- inside the first valve seat (19) there is a second valve seat (26) at the end of a valve pipe (25), which is guided axially displaceably in an aperture (25") of a third valve chamber (25"), and there is loaded by a first spring (25') in the direction of the valve piston (17); the third valve chamber (25") is connected to a volume (24) and via the second nozzle (23) to the brake line (BP);

- in the second valve chamber (16) there is a second spring (18) which loads the valve piston (17) in the direction of the two valve seats (19, 26); the valve piston (17) monitors both the first and the second valve seat; the second valve chamber (16) is open to the atmosphere.

7. Brake accelerator device according to claim 6, characterised in that the first valve chamber (20) is connected via a fourth nozzle (28) to a non-return valve (29) which in its open position connects the first valve chamber (20) additionally to the third nozzle (21) and thus to the atmosphere.

8. Brake accelerator device according to claim 6 and 7, characterised in that the first and the second nozzle (13, 23) are respectively smaller than the third and the fourth nozzle (21, 18), whereby the first nozzle (13) is smaller than the second nozzle (23) and the fourth nozzle (28) is larger than the third nozzle (21).

9. Brake accelerator device according to claim 1, characterised in that the accelerator (4, 8, 12) can be screwed as a valve component onto an emergency brake part of a brake control valve, and forms with this an emergency brake-/accelerator valve unit.

10. Brake accelerator device according to claim 1, characterised in that the accelerator (4, 8, 12) forms a separate valve component, wherein a non-return valve (7') is connected in parallel with the filling nozzle (7) and opens in the flow direction from the control chamber (QAC) to the brake line (BP), and closes from the brake line (BP) to the control chamber (QAC).

11. Brake accelerator device acccording to claim 1, characteriséd in that the control element (4) is constructed at the same time as an emergency brake piston, and forms an accelerator-/emergency brake piston unit which, apart from the sensor (8), monitors a second valve device (air vent valve 5) in a first air pressure transmission path (3, 4', 47) between the control chamber (QAC) and an air vent nozzle (6) and additionally a third valve device (44, 45) for a second air pressure transmission path (lines 2, 2", 48 and rapid air vent valve 46") between the brake line (BP) and the atmosphere.

12. Brake accelerator device according to claim 11, characterised in that the control element (4) is mechanically connected by means respectively of a coupling device (tappet 10; 9) to the sensor (8) and the second valve device (5), and in that into the coupling device (9) between the control element (4) and the second valve device (5) there is inserted a dead lift device (11), because of which in the case of a drop in pressure in the brake line (BP) the sensor (8) adopts the open position chronologically before the second valve device and, in the case of a pressure adjustment of the control chamber pressure (QA) at the brake line pressure (BP), the second valve device (5) adopts the closed position before the sensor (8).

13. Brake accelerator device according to claim 12, characterised in that the dead lift device (11) of the control element (4) comprises a springloaded valve tappet (40) which is longitudinally displaceable in a sleeve (41) fixed on the control element (4), and with its end projecting out of the sleeve (41) controls the second valve device (5), and in that in the sleeve (41) there is a stop (42) for catching the tappet (40).

14. Brake accelerator device according to claim 13, characterised in that the second valve device (5) comprises a valve seat (43) and a valve plate (44) which is loaded in the open direction of the second valve device (5) by a first spring tension (44'), in that the valve seat (43) is connected to the air vent nozzle (6), and in that a second spring tension (40') loading the valve tappet (40) is dimensioned to be greater than the first spring tension (44') loading the valve plate (44).

15. Brake accelerator device according to claim 14, characterised in that the maximum dead lift (h) between the stop (42) and the valve tappet (40) is available when there is equality between the pressure in the brake line (BP) and the pressure in the control chamber (QA), whereby the valve plate (44) is held in its closed position by the valve tappet (40).

16. Brake accelerator device according to claim 14 or 15, characterised in that the first valve device (air vent valve 5) has a second valve seat (45), in that the valve plate (44) is movably arranged in a valve chamber (46) and monitors the closing position of both valve seats (43, 35), and in that the valve chamber (46) is in connection with the control chamber (QAC) via the second valve seat (45) and is connected to a rapid air vent valve (46") for the brake line (BP).

17. Brake accelerator device according to claim 16, characterised in that the two valve seats (43, 45) limit the valve chamber (46) and are opposite each other, in that the free end of the tappet (40) projects through the second valve seat (45) and points in the direction of the valve plate (44), and in that the sleeve (41) on the emergency brake piston (control element 4) is movable with clearance in a pipe (47) which on the one hand is connected to the piston chamber (4') acted on by the QA pressure to one side of the emergency brake piston (control element 4), and on the other hand is connected to the second valve seat (45).

18. Brake accelerator device according to claim 11, characterised in that

- when there are slight drops in pressure per unit of time in the brake line (BP), which do not exceed a lower limiting value, to adjust the higher control chamber pressure (QA) to the slowly decreasing brake line pressure (BP), the control element (4) only controls the sensor (8), whereby air escapes slowly to the atmosphere from the control chamber (QAC) via the first nozzle (13) and the pulsator (12), without the pulsator (12) pulsing;

- in that, in the case of a drop in pressure per unit of time in the brakē line (BP), which exceeds the lower limiting value, for the introduction of a relatively low braking step, the control element (4) furthermore only controls the sensor (8), whereby the pulsator (12) is excited and taps a QAW/BPW mixed pressure to the atmosphere,

- in that, when an average to fairly high braking step is introduced, the control element (4) also controls the second valve device (air vent valve 5) in addition to the sensor (8), whereby both the pulsator (12) is caused to pulsate, and also QA air is conveyed out of the control chamber (QAC) via the air vent nozzle (6) to the atmosphere, and

- in that, in the case of a drop in pressure per unit of time in the brake line (BP), which exceeds an upper limiting value, to effect a rapid braking operation the control element (4), when the sensor (8) is open and the second valve device (5) is open, maintains the third valve device (44, 45) closed so as to trigger release of the rapid air vent valve (46'').

**Revendications**

1. Dispositif accélérateur de freinage à action pulsatoire pour des freins à air comprimé à action indirecte de véhicules sur rails, qui comporte les moyens suivants:

- l'accélérateur de freinage (4, 8, 12) opère à chaque palier de freinage d'un freinage de service (freinage régulier);

- l'accélérateur de freinage possède une première ouverture d'admission (2) pour des signaux de la pression qui règne dans la conduite de freinage et une seconde ouverture d'admission (3) pour des signaux de pression de référence;

- les signaux de pression de référence proviennent d'une chambre de commande (QAC), qui est reliée, par l'intermédiaire d'une tuyère de remplissage (7), à la conduite de freinage (BP);

- l'accélérateur de freinage (4, 8, 12) possède un organe de commande (4) qui répond à des différences de pression entre les ddeux signaux de pression au niveau des deux ouvertures d'admission (2, 3);

- l'organe de commande (4) contrôle une première soupape d'excitation qui est réalisée comme détecteur (8), pour le fonctionnement d'un pulsateur (12);

- le détecteur (8) est, d'une part, relié à la chambre de commande (QAC) et, d'autre part, au pulsateur (12), par l'intermédiaire d'une première tuyère (13) qui forme une première pression (QAW) dérivée à partir de la pression qui règne dans la chambre de commande (QAC);

- le pulsateur (12) est relié à la conduite de freinage (BP), par l'intermédiaire d'une seconde tuyère (23) qui forme une seconde pression (BPW) dérivée à partir de la pression qui règne dans la conduite de freinage (BP);

- à chaque palier de freinage, le pulsateur (12) prélève de façon cadencée les impulsions d'air comprimé des deux pressions dérivées (BPW/QAW) pour les envoyer dans l'atmosphère, la pression qui règne dans la conduite de frein et la pression qui règne dans la chambre de commande étant simultanément abaissées par l'intermédiaire du pulsateur (12); caractérisé par les moyens particuliers suivants:

- le pulsateur (12) forme une pression de mélange à partir de la première pression dérivée (QAW) et la seconde pression dérivée (BPW);

- la pression de mélange charge au moins un piston de soupape (30, 17) du pulsateur (12) dans le sens de l'ouverture d'une soupape d'admission (siège de soupapes (32, 26)) pour la seconde pression dérivée (BPW), dans une chambre de soupape (34, 22) du pulsateur (12), qui reçoit la pression de mélange;

- le pulsateur prélève à chaque palier de freinage des impulsions de la pression de mélange pour les envoyer dans l'atmosphère.

2. Dispositif accélérateur de freinage selon la revendication 1, caractérisé par le fait

- que le pulsateur (12) est constitué par deux soupapes (14', 15');

- que la première soupape (14') comporte un premier piston de soupape (30) qui sépare une première chambre de soupape (34) d'une seconde chambre de soupape (31), que la première chambre de soupape (34) est reliée à un premier volume (24') et est reliée, par l'intermédiaire de la première tuyère (13), au détecteur (8), qu'en outre la première chambre de soupape (34) est reliée à l'atmosphère par l'intermédiaire d'une troisième tuyère (21), et que la seconde chambre de soupape (31) est ouverte vers l'atmosphère;

- que dans la première chambre de soupape (34) se trouve un premier siège de soupape (32) qui est susceptible d'être fermé par le premier piston de soupape (30) et dont l'espace intérieur est relié à un second volume (24) et, par l'intermédiaire de la seconde tuyère (23), à la conduite de freinage (BP), que dans la seconde chambre de soupape (31) se trouve un premier ressort (31') qui charge le premier piston de soupape (30) dans le sens de la fermeture du premier siège de soupape (32);

- que la seconde soupape (15') comporte un second piston de soupapes (33) qui sépare une troisième chambre de soupape (35) d'une quatrième chambre de soupape (38), la troisième chambre de soupape (35) étant reliée par l'intermédiaire d'une quatrième tuyère (37) à l'atmosphère, que la quatrième chambre de soupape (38) est ouverte vers l'atmosphère, que dans la troisième chambre de soupape (35) se trouve un second siège de soupape (36) qui est susceptible d'être fermé par le second piston de soupape (33) et dont l'espace intérieur est relié à la première chambre de soupape (34), que dans la quatrième chambre de soupape (38) se trouve un second ressort (38') qui charge le second piston de soupape (33) dans le sens de la fermeture du second siège de soupape (36), et que la troisième tuyère (21) possède une section transversale notablement plus petite que celle de la quatrième tuyère (37).

3. Dispositif accélérateur de freinage selon la revendication 2, caractérisé par le fait que la première chambre de soupape (34) est reliée, par l'intermédiaire de la troisième tuyère (21), à la troisième chambre de soupape (35).

4. Dispositif accélérateur de freinage selon la revendication 2 ou 3, caractérisé par le fait que la première et la troisième tuyère (13, 21) sont sensiblement de grandeur identique et sont respectivement inférieures à la seconde et à la quatrième tuyère (23, 37), et que la quatrième tuyère (37) est plus grande que la seconde tuyère (23).

5. Dispositif accélérateur de freinage selon la revendication 2, caractérisé par le fait que les deux soupapes (14', 15) du pulsateur (12) opèrent de façon pulsatoire, avec décalage de phase entre elles, au rythme de l'accumulation de pression de la pression (QAW) et de la réduction de pression de la pression de mélange (QAW/BPW), la première soupape (14') étant amenée, avant la seconde soupape (15'), dans sa position d'ouverture ou de fermeture.

6. Dispositif accélérateur de freinage selon la revendication 1, caractérisé par le fait que le pulsateur (12) est constitué par deux soupapes (14, 15), avec les moyens caractéristiques suivants:

- la première soupape (14) comporte un piston de soupape (17) qui sépare une première chambre de soupape (20) d'une seconde chambre de soupape (16); la première chambre de soupape (20) est reliée, par l'intermédiaire d'une troisième tuyère (21), à l'atmosphère; dans la première chambre de soupape se trouve un premier siège de soupape (19) qui est susceptible d'être fermé par le piston (17) et dont l'espace intérieur (chambre de siège de soupape 22) est relié au détecteur (8) par l'intermédiaire de la première tuyère (13);

- à l'intérieur du premier siège de soupape (19) se trouve un second siège de soupape (26), à l'extrémité d'un tube de soupape (25) qui est guidé axialement dans une ouverture (25''') d'une troisième chambre de soupape (25''), et y est chargé par un premier ressort (25') en direction du piston de soupape (17); la troisième chambre de soupape (25'') est reliée à un volume (24) et, par l'intermédiaire de la seconde tuyère (23), à la conduite de freinage (BP);

- dans la seconde chambre de soupape (16) se trouve un second ressort (18) qui charge le piston de soupape (17) dans la direction vers les deux sièges de soupape (19, 26); le piston de soupape (17) contrôle aussi bien le premier que le second sièges de soupape; la seconde chambre de soupape (16) est ouverte vers l'atmosphère.

7. Dispositif accélérateur de freinage selon la revendication 6, caractérisé par le fait que la première chambre de soupape (20) est reliée, par l'intermédiaire d'une quatrième tuyère (28), à une soupape de retenue (29) qui, dans sa position d'ouverture, relie la première chambre de soupape (20), en plus de la troisième tuyère (21), à l'atmosphère.

8. Dispositif accélérateur de freinage selon la revendication 6 et 7, caractérisé par le fait que la première et la seconde tuyère (13, 23) sont respectivement plus petites que la troisième et la quatrième tuyère (21, 28), la première tuyère (13) étant plus petite que la seconde tuyère (23) et la quatrième tuyère (28) étant plus grande que la troisième tuyère (21).

9. Dispositif accélérateur de freinage selon la revendication 1, caractérisé par le fait que l'accélérateur (4, 8, 12) est susceptible d'être bridé, en tant qu'unité de construction de soupape, à une partie du frein d'urgence d'une soupape de commande du freinage, et forme, avec celle-ci, une unité de soupape de frein d'urgence/accélérateur.

10. Dispositif accélérateur de freinage selon la revendication 1, caractérisé par le fait que l'accélérateur (4, 8, 12) constitue une unité de construction de soupape distincte, étant noté qu'en parallèle sur la tuyère de remplissage (7) est montée une soupape de retenue (7') qui ouvre dans le sens de l'écoulement allant de la chambre de commande (QAC) vers la conduite de freinage (BP) et qui ferme de la conduite de freinage (Bp) vers la chambre de commande (QAC).

11. Dispositif accélérateur de freinage selon la revendication 1, caractérisé par le fait que l'organe de commande (4) est en même temps réalisé comme piston de freinage d'urgence et forme une unité accélérateur/ piston de freinage d'urgence, laquelle unité, surveille, en plus du détecteur (8), un second dispositif de soupape (soupape de désaération 5) dans une première voie de liaison d'air comprimé (3, 4', 47) entre la chambre de commande (QAC) et une tuyère de désaération (6), et, de plus, un troisième dispositif à soupape (44, 45) pour une seconde voie de liaison d'air comprimé (conduites 2, 2'', 48 et soupape de désaération rapide 46'') entre la conduite de freinage (BP) et l'atmosphère.

12. Dispositif accélérateur de freinage selon la revendication 11, caractérisé par le fait que l'organe de commande (4) est relié mécaniquement, par respectivement un dispositif d'accouplement (poussoir 10; 9) avec le détecteur (8) et le second dispositif à soupape (5), et que dans le dispositif d'accouplement (9), et entre l'organe de commande (4) et le seconde dispositif à soupape (5), est disposé un dispositif à courses mortes (11) grâce auquel, dans le cas d'un abaissement de la pression dans la conduite de freinage (BP), le détecteur (8) passe, dans le temps, avant le dispositif à soupape (5) dans la position d'ouverture, alors que dans le cas d'une égalité de pression de la pression qui règne dans la chambre de commande (QA) avec la pression qui règne dans la conduite de freinage (BP) le second dispositif à soupape (5) passe, avant le détecteur (8), dans la position de fermeture.

13. Dispositif accélérateur de freinage selon la revendication 12, caractérisé par le fait que le dispositif à courses mortes (11) de l'organe de commande (4) est constitué par un poussoir de soupape (14) chargé par un ressort, lequel poussoir est guidé dans le sens longitudinal dans une douille (41) solidaire de l'organe de commande (4), et dont l'extrémité qui déborde la douille (41) contrôle le second dispositif à soupape (5), alors que la douille (41) est pourvue d'une butée (42) servant à retenir le poussoir (40).

14. Dispositif accélérateur de freinage selon la revendication 13, caractérisé par le fait que le second dispositif à soupape (5) est constitué par un siège de soupape (43) et par un plateau de soupape (44) qui est chargé, dans le sens de l'ouverture du second dispositif à soupape (5), par la force d'un premier ressort (44'), que le siège de soupape (43) est relié à la tuyère de désaération (6), et qu'une seconde force de ressort (40') qui charge le poussoir de soupape (4) est plus forte que la première force de ressort (44') qui charge le plateau de soupape (44).

15. Dispositif accélérateur de freinage selon la revendication 14, caractérisé par le fait que la course morte maximale (h) entre la butée (42) et le poussoir de soupape (40) a lieu en cas d'égalité de pression entre la pression qui règne dans la conduite de frein (BP) et la pression qui règne dans la chambre de commande (QA), le plateau de soupape (44) étant maintenu, par le poussoir de soupape (40), dans sa position de fermeture.

16. Dispositif accélérateur de freinage selon la revendication 14 ou 15, caractérisé par le fait que la premier dispositif à soupape (soupape de désaération 5) comporte un second siège de soupape (45), que le plateau de soupape (44) est disposé de façon mobile dans une chambre de soupape (46) et contrôle la position de fermeture des deux sièges de soupape (43, 45), et que la chambre de soupape (46) est reliée, par le second siège de soupape (45), à la chambre de commande (QAC) et est reliée à une soupape de désaération rapide (46") pour la conduite de freinage (BP).

17. Dispositif accélérateur de freinage selon la revendication 16, caractérisé par le fait que les deux sièges de soupape (43, 45) limitent la chambre de soupape (46) et se situent l'un en face de l'autre, que l'extrémité libre du poussoir (40) traverse le second siège de soupape (45) et s'étend dans le sens du plateau de soupape (44), et que la douille (41) du piston de freinage d'urgence (organe de commande 4) est déplaçable avec jeu dans un tube (47) qui est relié d'une part à la chambre de piston (4') qui est chargée par la pression (QA), d'un côté du piston du frein d'urgence (organe de commande 4), d'autre part au second siège de soupape (45).

18. Dispositif accélérateur de freinage selon la revendication 11, caractérisé par le fait - que dans le cas de faibles chutes de pression, par unité de temps, dans la conduite de freinage (BP) qui ne passent pas endessous d'une valeur limite inférieure, et pour l'égalisation de la pression élevée (QA) qui règne dans la chambre de commande à la pression qui chute faiblement dans la conduite de freinage (BP), l'organe de commande (4) ne commande que le détecteur (8), de l'air provenant de la chambre de commande (QAC) s'échappant lentement, en passant par la première tuyère (13) et par le pulsateur (12), vers l'atmosphère, sans que le pulsateur (12) soit cadencé;

- que dans le cas d'une chute de pression qui passe en-dessous de la valeur limite inférieure, par unité de temps, dans la conduite de freinage (BP), l'organe de commande (4) continue à n'attaquer que le détecteur (8) en vue d'introduire un palier de freinage relativement modeste et, le pulsateur (12) étant excité et prélevant, pour l'envoyer dans l'atmosphère, une pression de mélange (QAW/BPW);

- que dans le cas de l'introduction d'un palier de freinage moyen à un palier élevé, l'organe de commande (4) commande, non seulement le détecteur (8), mais également le second dispositif à soupape (soupape de désaération 5), grâce à quoi le pulsateur (12) est amené dans son état pulsatoire et que l'air (QA) est évacuée dans l'atmosphère, en provenance de la chambre de commande (QAC) et en passant par la tuyère de désaération (6); et

- que dans le cas d'une chute de pression qui dépasse une valeur limite supérieure, par unité de temps, dans la conduite de freinage (BP) et pour déclencher un freinage rapide, l'organe de commande (4), lorsque le détecteur (8) est ouvert et que le second dispositif de soupape (5) est ouvert, ferme le troisième dispositif à soupape (44, 45) afin d'autoriser tout déclenchement de la soupape de désaération rapide (46").

Fig.1  Prior Art (Stand der Technik)

Fig. 2

Fig.3

Fig.4